## Europäisches Patentamt

## European Patent Office

## Office européen des brevets

(11) Publication number: **0 272 271 B1**

# EUROPEAN PATENT SPECIFICATION

(45) Date of publication of patent specification: **12.12.90**

(51) Int. Cl.⁵: **H 04 L 12/12**

(21) Application number: **86906427.9**

(22) Date of filing: **17.10.86**

(86) International application number:
**PCT/IT86/00075**

(87) International publication number:
**WO 87/02534 23.04.87 Gazette 87/09**

(54) **PROCESS AND RELATED DEVICE FOR REMOTE-CONTROLLED SWITCHING-ON OF TERMINAL EQUIPMENTS USED IN DATA TRANSMISSION AND TELE-PROCESSING.**

(30) Priority: **18.10.85 IT 2254985**

(43) Date of publication of application:
**29.06.88 Bulletin 88/26**

(45) Publication of the grant of the patent:
**12.12.90 Bulletin 90/50**

(84) Designated Contracting States:
**AT BE CH DE FR GB IT LI LU NL SE**

(56) References cited:
**DE-A-26 444 31**

**IBM Technical Disclosure Bulletin, volume 26, no. 12, May 1984, New York, (US); P. Vachée: "Data terminal equipment remotely powered by a modem equipped with a contact sense/operate facility"**

**Patents Abstracts of Japan, volume 7, no. 174 (E-190)(1319) 2 August 1983 & JP,A,5881372**

(73) Proprietor: **BERNARDI, Guido**
**Viale Zara, 58**
**I-20124 Milan (IT)**

(72) Inventor: **BERNARDI, Guido**
**Viale Zara, 58**
**I-20124 Milan (IT)**

(74) Representative: **Dr. Ing. A. Racheli & C.**
**Viale San Michele del Carso, 4**
**I-20144 Milano (IT)**

Courier Press, Leamington Spa, England.

## Description

The subject of the invention is a process and device for the remote-controlled switching-on of terminal equipments for data transmission and tele-processing.

At present anyone wishing to tele-transmit data must comply with some basic regulations established by CCITT standards (Consultative Committee on International Telephone and Telegraph) and universally adopted by manufacturers of data tele-processing (or TP) equipments.

These standards basically provide that the data are exchanged between DTE (Data Terminal Equipment) user systems inter-connected by a data link generally consisting of a public or private network), through which a correct transfer of data is carried out by means of suitable interface units (DCE — Data Communication Equipment) located between the user system and the data link (network).

The user systems which can be connected for transmitting and tele-processing data may be of different types: basically they can be grouped into "Independent Processing Units", comparable to processors and generally indicated by the abbreviation CPU (Central Processing Unit), and "more or less intelligent terminals" of the above-mentioned processors. With DTE, both types of user systems are hereafter intended.

When the data link consists of a telephone channel, the DCE interface unit is made up of a MODEM (Modulator-Demodulator). This is a unit for converting data from the digital form, used by terminals and mainframe processors, into analogue form, suitable for transmission through a telephone channel and vice-versa. Sometimes the said MODEMS are connected to PSTN (Public Switched Telephone Network). However, the MODEM and PSTN interfaces on both the network side and the terminal equipment side must comply with the recommendations in the CCITT standards.

Nowadays, in order to operate in an unattended environment, all the peripheral terminal equipment must be left continually switched on and supplied with power. This may not be advisable, especially if the data is to be transmitted at night — in any case, when no personnel is present — and the transmission involves the peripheral terminal equipment (DTE/CPU) for a very short time compared to that in which the power supply should be on.

At present it is possible to remotely switch-on the called terminal equipment by using the indications included in DE—A—2 644 431.

This solution however is very complex necessitating the use of units comprising a reading/writing memory to be included both in the interface unit and the called terminal equipment, units which directly interact with the main computer memory of the called terminal equipment.

This solution has the disadvantage of not allowing an immediate and perfect interface of said unit with any type of interface equipment and terminal equipment existing on the market. Furthermore, in this case the called terminal equipment must have the characteristics of a computer which involves higher costs.

The object of this invention is therefore to eliminate manual intervention for switching on and supplying power to the peripheral terminal equipments, while permitting its application to any type of apparatus.

A further object is to provide a process and a device which protect the called terminal by cutting off the power supply in case of wrong calls (more or less accidental), and prevent erroneous data transfer.

Another object is to provide a device which interfaces perfectly with existing CCITT standards equipment, and which is not too expensive.

The object is achieved with a switch-on device employed in a connection between at least one calling terminal equipment and at least one called terminal, each being linked to the related interface unit connected to the data link, wherein the called terminal equipment normally uses a start-up procedure. Said switch-on device is normally connected to the mains supply and only supplies power to the called terminal when it receives an ON signal from the interface unit on the called side. According to the invention, the switch-on device comprises a timer with a pre-set timing interval which is greater than the time interval required by the start-up procedure of the called terminal. Said timer acts by allowing the feeding of a switch device which connects the mains supply with the called terminal and maintains the said connection for the whole time interval needed to complete the start-up procedure. When the peripheral unit has terminated the said procedure, the supply of power is maintained only if the called terminal sends a consent signal to the interface (DCE). If this does not happen, the supply of power to the called terminal is cut off.

The invention will now be described with reference to some exemplary embodiments shown in the enclosed drawings, wherein:

Fig. 1 is a schematic representation of a conventional connection of PSTN between a calling terminal and a called terminal;

Fig. 1a shows another conventional connection on PSTN equipped with Modems provided with automatic calling and answering features;

Fig. 2 shows the configuration of the device according to the invenion in a connection through PSTN, the said device being placed between the called interface unit (DCE) and the called terminal (DTE).

Fig. 3 shows the block diagram in a point to point connection between two terminals connected to a 4-wire dedicated telephone line;

Fig. 3a shows, for a full duplex type data transmission through a 4-wire dedicated telephone line, the connection diagram shown in Fig. 3 placed between the called DCE and the called DTE;

Fig. 4 shows the block diagram in a multi-point connection between a calling terminal and several called terminals connected to the first one through a 2-wire or 4-wire dedicated telephone line;

Fig. 4a shows, for a full duplex or a half duplex type data transmission through a 2-wire or 4-wire dedicated telephone line, the connection diagram of the device shown in Fig. 4 placed between the called DCE and the called DTE.

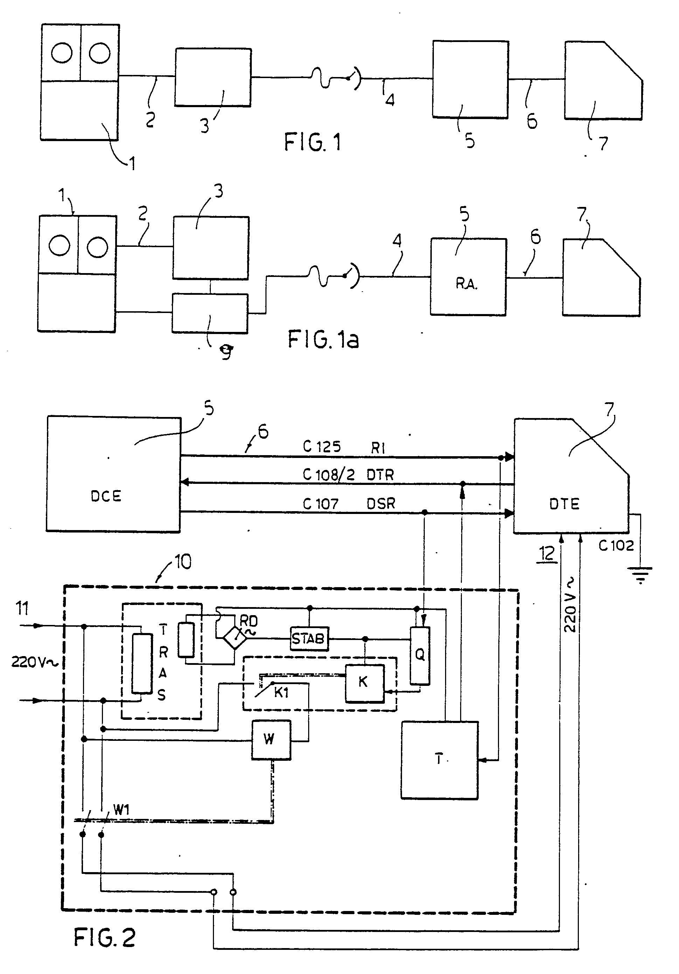

Fig. 1 shows a schematic representation of an exemplary connection for data transmission through PSTN. 1 indicates the CPU user system which transmits and receives data in digital form (it may, however, be any terminal able to carry out the above-described function). 2 and 6 indicate the local connection between the user system (DTE) and the MODEM (DCE), the said connection being a physical-local link, according to the CCITT standards, in which the data transit in digital form.

3 and 5 indicate the DCE interface unit, in this case a MODEM with CCITT interfaces on the user side and line side, which transforms the data from digital (user side) into analogue (line side) and vice-versa.

4 identifies the PRTN link; 7 identifies the DTE equipment receiving and transmitting data in digital form.

In order to start the data transmission and receiving procedure, several preliminary conditions must exist, that is: the user systems must be supplied with power and be in the ready condition, that is, they must have positively completed their own start-up stage, which is a preset procedure in the equipment itself. Moreover, the DCE interface units must be in a switched-on condition and physically connected to the corresponding user system and to the line. Finally, the telephone line must be connected, that is, there must be a physical connection between the line and the DCE, the two latter communicating with one another and with the respective user systems.

To achieve these preliminary conditions, manual intervention is required at some stage, even if some devices can be programmed for automatically carrying out some functions.

By way of example, a connecting process through a PSTN (Public Switched Telephone Network) with the type of connection process involving maximum manual intervention, that is, foreseeing an operator at each end of the data link is as follows: the operator at terminal 1 and corresponding interface 3 must connect the two equipments to the power supply and initiate the start-up procedure of the said terminal 1. At the same time, the operator at terminal 7 and relative interface unit 5 must connect the two equipments to the power supply and initiate the start-up procedure of the said terminal 7.

The next step is network connection including calling of the desired equipment (DCE) and manual execution of one conventional known procedures for establishing the connection between the two interface units and related terminals, and for starting the data exchange.

However, the actual data transmission is controlled by suitable software procedures resident in the respective terminal and handled on the telephone line by the DCE interface units.

If suitable devices are provided, such as an automatic calling device or autodialer at the calling terminal (indicated by 9 in Fig. 1a) and automatic answering device at the called terminal (generally contained in the interface unit 5), some of the manual operations needed for establishing the said connection can be avoided. This type of connection procedure, especially suitable for batch transfer of data in an unattended environment, still required a manual intervention phase for the feeding and switching on of the called user peripheral systems (DTE).

The present invention provides an automatic feeding system which enables a completely automated data transmission both on a switched telephone network and a dedicated line in unattended environments, where the called terminal equipment is normally off.

Case I:
Switched telephone network, full duplex (FDX) or half duplex (HDX) transmission

It can be seen in Fig. 2 that the device 10 according to the invention is connected, in case of a switched telephone line, to the local connecting link 6 between the interface unit 5 and the called terminal 7. The interface unit may be a DCE device for example a MODEM, or also a switched network terminal usually supplied by the local telephone company.

The device 10 according to the invention is connected to the power supply at 11. The unit is provided with a transformer device TRAS, one part thereof is connected to a stabilizing circuit. The other part of the circuit is connected to a power connecting device W, such as a relay switch, the latter being connected to the contact W1 between the mains supply and the feed circuit 12 of the terminal. The circuit is completed by a switch device made up of a relay K, controlled by a suitable feed control circuit Q by means of the DSR signal (Data Set Ready) outputted from the interface unit 5 on the user side (C 107). Finally, the device 10 is provided with a timer T — essential element — which receives a signal from the signal detector circuit outputted from the interface unit 5 (C 125) and acts on the DTR circuit which inputs the interface unit on the user side (C 108/2). The preset timing interval X is greater than the time interval required for the start-up procedure of peripheral unit 7, including the times for delayed switch-on and autotest of the terminal plus the loading and running of the data transmission procedure already preset in the terminal.

The device of this invention works according to the following logical scheme.

When the call arrives from the calling terminal, the interface unit 5 puts the pin C 125 into the ON condition (as established by CCITT standards). This activates the timer T for the whole time interval X. The pin C 108/2 of the interface unit 5 is thereby placed in the ON condition. The interface unit 5, in turn, puts the pin C 107 in the ON condition, which activates by means of feed control circuit Q the relay K. The latter closes the contact K1, thereby supplying power to the relay switch W, which closes the contacts W1 supplying voltage to the terminal 7. At this stage said terminal 7 initiates the start-up procedure which ends in a time interval $T_1$ which is smaller than X.

As provided in the CCITT standards, at the end of this procedure the called terminal 7 puts its own output pin 108/2 in the ON condition. When the interval X elapses, the timer T switches off its connection with the pin C 108/2 of the interface unit 5; however, this has no effect because the pin C 108/2 of the interface unit 5 is held in the ON condition by said terminal 7, which has positively ended its start-up procedure.

When the data exchange is at the end, either the calling terminal or the called one itself cuts off the connection. It does this by putting the pin C 108/2 of the interface unit on the called side at the OFF condition. As a result, the pin C 107 is placed at the OFF condition. Consequently, the feed control circuit Q disactivates the relay K which opens the contact K1 by causing the contact W1 to open. The power supply is thereby cut off.

If the terminal 7 includes in its start-up phase a control software procedure of authorised calls, in case of a wrong or unauthorised call, it switches on and initiates start-up for a time interval X. When the interval X is over, if no valid call condition occurs, said software procedure places the pin C 108/2 on OFF, consequently the pin C 107 is placed on OFF and the feed control circuit Q acting on the relay K cuts off power to the called terminal 7.

The circuits of device 10 can also comprise integrated components with semiconductors carrying out the same functions described above.

According to the invention, the CCITT connecting procedure and the interfaces to the DCE and DTE equipment are in no way affected. Telephone charges are at the expenses of the calling user.

Both in this case as in the following ones, at the start of each call, the calling processor must activate a software procedure which guarantees that the data transmission does not start before the called peripheral unit is ready to receive it.

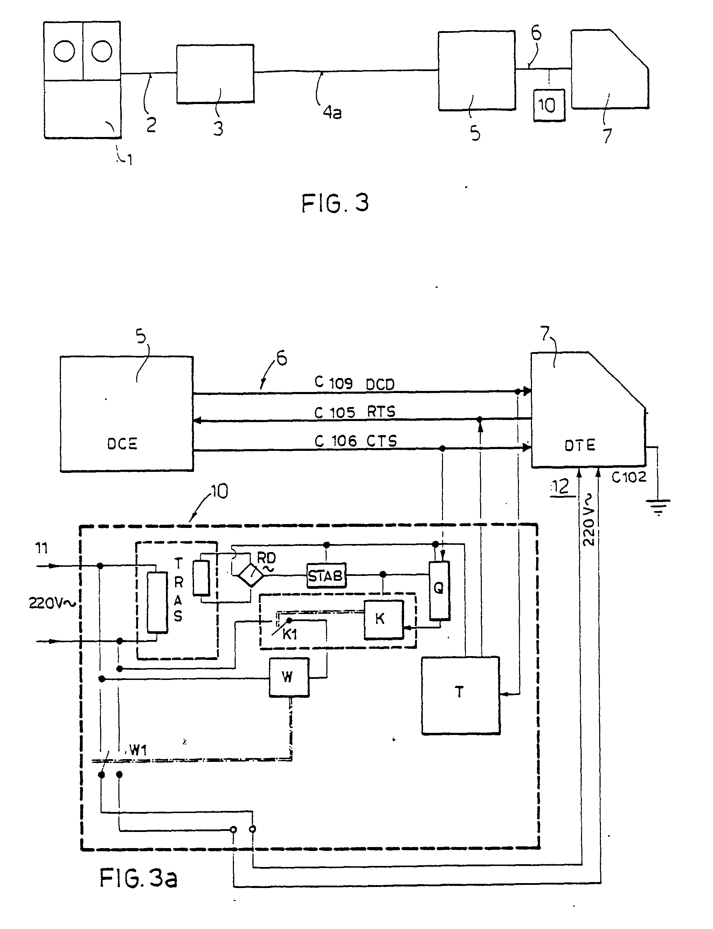

Case II:
Device for point to point connection on a 4-wire non-switched telephone link (Figures 3 and 3a), (full duplex transmission)

On receiving a transmission request signal sent by the interface unit 3 (calling DCE) the interface unit 5 (called DCE) places pin C 109 (also called DCD) in the ON condition. This signal activates the timer T for the whole time interval X. This immediately places the pin C 105 (also called RTS) of the interface unit 5 in the ON state and keeps it for the whole time X. In its turn, the interface unit 5 places in the ON state the pin C 106 (also called CTS).

This signal, by means of the feed control circuit Q, activates the relay K which closes the contact K1 feeding the relay switch W which acts by closing the contacts W1, which supply voltage to the terminal 7. At this stage the terminal 7 initiates its start-up procedure (inclusive of the time necessary to the DTE to carry out the recognition of its address) which ends in a time interval t1 shorter than X.

As provided by CCITT standards, if the start-up procedure is positive, the terminal 7 places its output pin C 105 in the ON condition. At the end of the time interval X, the timer X cuts off voltage from its connection to pin C 105, this has no effect however because the pin C 105 of the interface unit 5 is kept on ON by the terminal 7 itself which, having recognised its address, has ended its start-up procedure positively.

When the exchange of data is over, it is necessary for the software resident on the called terminal 7 to place its pin C 105 in the OFF condition. As a result the pin C 106 of the interface unit 5 (called DCE) is placed at the OFF condition. Consequently the feed control circuit Q disactivates the relay K which opens the contact K1 causing the opening of the contacts W1.

Power supply to the called terminal equipment 7 is thus disconnected and consequently it switches off and is ready for a subsequent power up whtn the terminal equipment 1 will call again.

In the case of a connection on a dedicated line — therefore also for the following Case III — at the end of each transmission the calling processor must place on OFF its pin C 105. This task can be left to one of the software program resident in the calling processor. This causes the voltage on the pin C 109 at the called interface unit 5 to drop.

After that the timer T is able to start again a new count for time X (during which it keeps forced in the ON condition the pin 105 of the interface unit 5) when a subsequent ON condition of the pin C 109 of the interface unit 5 takes place, as a consequence of the launching of a new call by the calling processor.

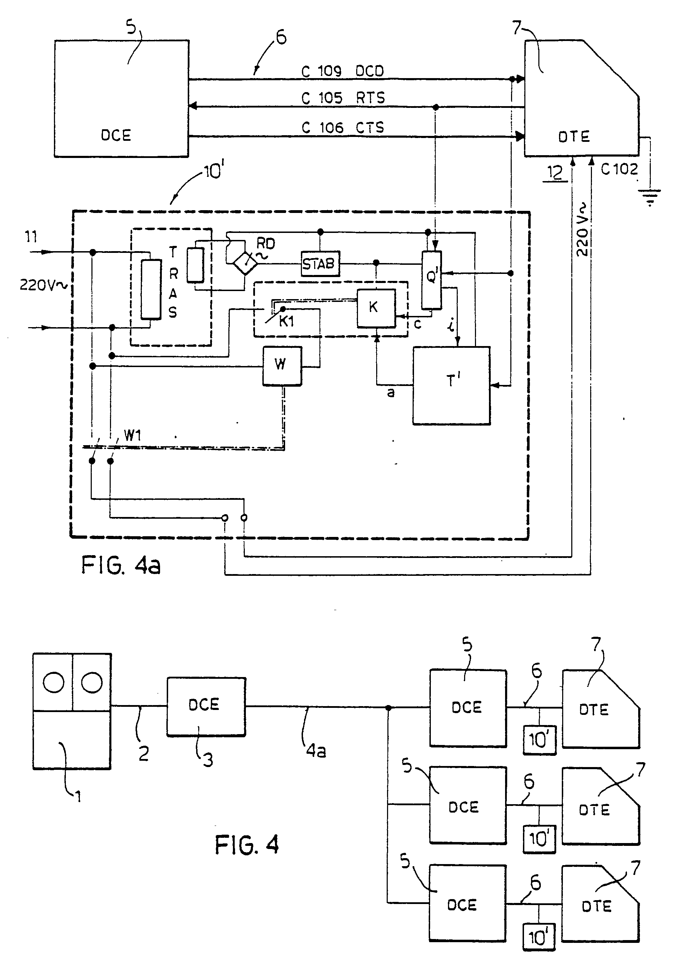

Case III:
Device for multi-point connection on a 2-wire or 4-wire non-switched telephone line (Figures 4 and 4a), full dupled or half duplex transmission

To carry out devices apt to function in both half duplex and full duplex transmissions through 2-wire and 4-wire dedicated telephone lines for point to point and multi-point connections, it is necessary for the timer and the feed control circuit of said devives to have the following characteristics:

The timer T'
must be controlled by the feed control circuit Q' by means of an inhibiting signal $i$ according to the following logic:
—in the absence of signal *1* (i=OFF) when the timer T' receives in input the C 109 ON signal it must send, during the whole externally preset time X, the *a* activation signal of the relay K.
—in the presence of signal $i$ (i=ON) the timer T cannot activate the signal *a*, even if it receives the C 109 ON signal in input.

The feed control circuit Q'
   receives in input the C 109 and C 105 signals and sends in output the timer control *i* and feed control *c* signals, the *i* signal being delayed as regards to the C 109 signal in input.

   The feed control circuit Q' is to carry out also an externally predeterminable reset function, so that in the case of simultaneous absence of the C 109 and C 105 signals for a time interval equal or greater than Y (externally predeterminable Reset condition), the *c* and *i* signals are placed in the OFF condition.

The functioning logic of the feed control circuit Q' must be the following:
a) in the absence of signal *i*(*i*=OFF)
   —on receiving signal C 109 in input, the circuit Q' activates the signal *i* placing it on the ON state in a slightly delayed moment as regards to the activation moment of the *a* signal sent by the timer T' and keeps it constantly in that state until the reset condition occurs.

b) in the presence of signal *i* (*i*=ON)
   —on receiving the C 105 ON signal in input — it activates the signal *c* placing it in the ON state and keeping it constantly in that state until the reset condition occurs.

c) when the reset condition occurs, the same consisting in the simultaneous absence of signals C 105 and C 109 for a time interval equal or greater than Y, the Q' circuit lowers the signal *c* and *i* placing them in the OFF state.

   A manual reset of the circuit Q' can eventually be foreseen by means of a switch.

   The device's logical functioning diagram is the following:
   On receiving the transmission request signal sent by the interface unit 3 (calling DCE), the called interface units 5 (DCE) place the pin C 109 at the ON condition (DCD).

   This signal is sent to each feed control circuit Q' and to each timer T', the latter — in the absence of the inhibiting signal *i* — lifting and maintaining for the whole time interval X the activation signal *a* of the relay K which closes the contact K1 and maintains feeding to relay switch W which in turn acts by closing the contact W1 giving voltage to the power supply of the corresponding terminal 7.

   At this stage each terminal 7 initiates its start-up procedure which ends in a time interval t1, t2, t3 shorter than X and must also include the time necessary for the recognition of its address.

   As provided by CCITT standards, at the end of the start-up procedure, only the terminals 7 which have recognized their address place their own output pin C 105 at the ON condition. This signal is sent in input to the feed control circuit Q' which, in the presence of signal *i*=ON lifts in ON the signal *c* which it sends to the relay K.

   The signal *c* performs as "constant to feeding" and replaces signal *a* in the excitation of the relay K allowing the contact K1 to remain close and also therefore to carry on feeding to the connected terminal, even after expiration of the time X.

   Once lifted, the signal *c* is kept activated until the reset condition of the feed control circuit Q' occurs.

   At the expiration of the time interval X, the timer T cuts off voltage from its connection *a*. This action is without effect, as the relay K remains activated by the presence of the signal *c*. Therefore all the terminals ß which have recognized their address remain fed.

   In all the devices connected to the other terminals 7 instead, after expiration of the time X, the timer T' disactivates the signal *a*, in the absence of signal *c*. This results in the drop of excitation to relay K which opens the contact K1 causing the opening of contacts W1 with consequent feed break to the supplies of the terminals 7 connected to them. Therefore at the expiration of time X all the terminals 7 which have not recognized their address are switched off.

   In the meantime, the ON condition of the signal C 109 which had detected the call from the calling terminal 1 had been sent also to the feed control circuit Q' causing the switching on of the signal *i* (slightly delayed as regards to the moment when the signal *a* has been activated by timer T'). This signal *i* remains till the reset condition occurs.

   This signal *i* is sent to timer T' whch, because of the signal's presence, is unable to activate anew the signal *a* when subsequent variations in the ON state of the signal C 109 occur.

   During the talking phase between calling terminal 1 and called terminals 7, the presence of the inhibiting signal *i* in the devices 10' prevents the 'un-fed' terminals 7 to switch on again at the variation from OFF to ON state of the signal C 109 when the data transmission is carried out in half-duplex.

   Similarly to what described in the previous Case II, at the end of the talking phase, the calling processor 1 and the terminals 7 interested to the dialogue must place their pin C 105 in the OFF state keeping it continuously in said condition for the time interval Y equal or greater than the one set up for the reset condition of circuit Q'.

   As at the pin C 105 OFF condition on calling interface unit 3 corresponds a signal drop on pin C 109 of all the called interface units 5, this causes a reset condition in each device 10' and the consequent disactivation of the *i* and *c* signals of the feed control circuit Q'.

   The fall of the signal *c* causes an excitation drop in relay K which opens the contact K1 causing withdrawal of feeding to terminal equipment 7. The fall of the signal *i* allows for a possible new activation of the timer T', with the consequent re-feeding of the terminal equipment.

**Claims**

   1. A process for remote-controlled switching on of terminals for data transmission and tele-processing, according to which at least one DTE Calling Terminal (1) sends a calling signal, by means of at least one DCE Interface unit (3), through at least one data link connected to an interface unit (5), in turn connected to at least one called DTE (7), the latter being able to carry out a start-up procedure whenever connected to the power supply, characterized in that it foresees that on receiving a calling signal to an unattended terminal (7), a devive (10, 10') provides

I) to give voltage to the called terminal (7) which starts up;

II) to simultaneously simulate for the calling unit (1), during a time interval (X) greater than the time necessary for the start-up procedure of the called terminal (7), the 'ready' condition of the called terminal, causing on the calling one a waiting phase which maintains the call for all the time interval (X), then at expiration of the time interval (X) the waiting phase is interrupted and power supply to the called terminal (7) continues only if the terminal has terminated positively its start-up procedure.

2. A process according to claim 1, characterized in that the start of the significant data transmission happens only when the called terminal (7) has confirmed by software the positive result of its start-up phase.

3. A process according to claim 1 or 2, characterized in that

a) the calling signal activates a timer (T), through connection to the signal detector pin (C 125, C 109) of the interface unit (5) on the called side, for a preset time interval (X) greater than the time interval needed to carry out the start-up procedure;

b) said timer sends immediately to the called interface unit (5) a signal which puts the terminal equipment ready pin (C 108/2, C 105) on the ON condition and maintains this condition for all the time interval (X);

c) as a result thereof the ready to send pin (C 107, C 106) of the called interface unit (5) is put in the ON state causing feeding of the called terminal equipment (7);

d) the start-up procedure initiates and proceeds during its distinctive time interval; if the end result of said procedure is favourable for the continuation of the connection, the called equipment (DTE) (7) sends a signal which puts the terminal equipment ready pin (C 108/2, C 105) at the ON state;

e) at the end of the time interval (X) the output of the timer (T) is cut off so that, subsequently, the connection between the mains supply (11) and the called terminal (7) only remains active if the called terminal (7) maintains the terminal equipment ready pin (C 108/2, C 105) at the ON state.

4. A process according to claim 1 or 2, characterized in that

a) the calling signal, through a connection with the signal detector pin (C 109) of the interface unit (5) on the called side, activates a timer (T') for a preset time interval (X) greater than the time interval (t1, t2, t3) needed to carry out the start-up procedure;

b) said timer causes immediate feeding of the called terminal (7) and keeps it on for the whole time interval (X);

c) the start-up procedure initiates and proceeds during its distinctive time interval (t1, t2, t3); if it ends with a result favourable to continuation of the connection, the called unit (7) sends out a signal which activates the terminal equipment ready pin (C 105);

d) the calling signal, through the connection with the signal detector pin (C 109) of the interface unit (5) on the called side, is also sent to a feed control circuit (Q') which in turn sends a signal (i) to the timer (T'), the signal inhibiting by its presence reactivation of the feeding of the called terminal (7);

e) the feed control circuit (Q') is connected to the terminal equipment ready pin (C 105) of the called terminal (7) so that, once the starting-up is positively completed and the terminal equipment ready pin (C 105) is placed in the ON state, the latter causes the sending out of a signal (c) which maintains power supply to the called terminal (7);

f) at the end of the timing interval (X), the timer (T') cuts off the signal that had activated supply (feeding) from the mains (11) to the called terminal (7); feeding persists only if the called terminal (7) keeps the 'terminal equipment ready' pin (C 105) active;

g) the simultaneous absence of voltage at signal detector pin (C 109) and at the terminal equipment ready pin (C 105) for a present time interval (Y) causes a feed drop in the called terminal (7).

5. A device for remote-controlled switching-on of called terminals (7) for data transmission and tele-processing, said device being part of a system which comprises at least one calling terminal (1) and at least one called terminal (7), connected to the corresponding interface units (3, 5), the latter connected to a data link (4, 4a); said called terminal (7) being able to carry out its own start-up procedure, characterized in that

a) said switch-on device is located between the called interface unit (5) and the called terminal (7) and

b) it comprises a unit simulating to the calling unit, the ready condition of the called unit, said unit comprising at least one timer (T, T') with a preset time interval (X) greater than the time interval (t1, t2, t3) required by the called terminal (7) to carry out its own start-up procedure, the input of said timer (T, T') being connected to the signal decector pin (C 125, C 109) of the interface unit (5), the output of said timer controlling the feeding of the called terminal (7) by means of at least one switch device (K, W) so that the called unit continues to be fed only if it has successfully completed its start-up procedure.

6. A device according to claim 5, characterized in that the switch device comprises one relay switch (W) connected to a relay (K).

7. A device according to claim 5 or 6, characterized in that it is fed by a suitable transformer (TRAS) connected to the external mains supply (11).

8. A device according to any of the claims from 5 to 7, characterized in that it also provides a feed control circuit (Q) which, in the presence of the okay signal taken from the connection to the 'interface unit ready' indicator pin (C 107, C 106), sends an excitation voltage to the switch device (K, W).

9. A device according to any of the claims 5 to 7, characterized in that it foresees a feed control circuit (Q') connected to the signal detector pin (C 109) and to the terminal equipment ready indicator pin (C 105), said circuit (Q') being such that:

—on receiving the ON signal on the signal detector pin (C 109), it activates a timer (T') which remains activated till the reset condition occurs and prevents the timer (T') to close the switch device (K, W) as long as it is activated;

—on receiving the ON signal at the terminal equipment ready pin (C 105), it keeps the switch device (K, W) closed until the reset condition occurs;

—on detection of the simultaneous absence of signals at terminal equipment ready pin (C 105) and at signal detector pin (C 109), during a preset time interval (Y), it cuts off the timer (T') thus cutting supply to the called terminal (7).

**Patentansprüche**

1. Verfahren zur ferngesteurten Einschaltung von Terminalapparaten zur ortsfernen Datenübertragung und -verarbeitung (tele-processing), bei welchem mindestens ein anrufender Terminalapparat DTE (1) über mindestens einen Schnittstellenapparat DCE (3) ein Rufsignal bei mindestens einem Übergragungsträger ausgibt, der mit einem Schnittstellenapparat (5) verbunden ist, welcher wiederum mit mindestens einem angerufenen Terminalapparat DTE (7) verbunden ist, wobei letztgenannter Apparat in der Lage ist, jedesmal einen Initialisierungsprozedur auszuführen, wenn er an die Stromversorgung angeschlossen wird,

gekennzeichnet durch den Umstand, daß vorgesehen ist, daß beim Eintreffen eines Rufsignals bei einem abgeschalteten Terminalapparat (7), welcher unbesetzt ist, eine Vorrichtung (10, 10')

I) dafür sorgt, daß der augerufene Terminalapparat (7) mit Strom versorgt wird, welcher daraufhin seine eigene Initialisierung ausführt;

II) gleichzeitig für die Dauer eines Zeitintervalls (X), das größer ist als die Zeit, die für die Initialisierung des angerufenen Terminalapparats (7) benötigt wird, den Zustand der Betriebsbereitschaft des angerufenen Apparats (1) simuliert, wodurch für selbigen anrufenden Apparat eine Wartephase bewirkt wird, die den Anruf während der gesamten Zeitspanne (X) aufrechterhält; nach Ablauf des Zeitintervalls (X) wird dann die Wartepause unterbrochen und die Stromversorgung des angerufenen Terminalapparates (7) bleibt nur bestehen, wenn dieser seine Initialisierung mit positivem Ergebnis abgeschlossen hat.

2. Verfahren wie unter Patentanspruch 1 beschrieben, gekennzeichnet durch den Umstand, daß der Beginn der Übertragung der signifikativen Daten erst dann erfolgt, wenn der angerufene Terminalapparat (7) über Software das positive Ergebnis seiner Initialisierungsphase bestätigt hat.

3. Verfahren wie unter Patentanspruch 1 oder 2 beschrieben, gekennzeichnet durch den Umstand, daß

a) das Rufsignal über eine Verbindung mit dem Signalerkennungs-Anschlußstift (C 125, C 109) des Schnittstellenapparats (5) auf der angerufenen Seite eine Zeitgebungsschaltung (T) für ein zuvor festlegbares Zeitintervall (X) aktiviert, das größer ist als die Zeitspanne, die für die Ausführung der Initialisierung benötigt wird;

b) die besagte Zeitgebungsschaltung augenblicklich an den Schnittstellenapparat (5) auf der angerufenen Seite ein Signal ausgibt, das den Anschlußstift zur Meldung der Terminalapparat-Betriebsbereitschaft (C 108/2, C 105) in den aktiven Zustand versetzt und diesen Zustand für die gesamte Dauer des Zeitintervalls (X) anfrechterhält;

c) der die Bereitschaft zur Übertragung meldende Anschlußstift (C 107, C 106) des Schnittstellenapparats (5) auf der angerufenen Seite in den Zustand ON versetzt wird, wodurch die Stromversorgung des angerufenen Terminalapparats (7) bewirkt wird;

d) die Initialisierungsprozedur beginnt und für die Dauer des für die charakteristischen Zeitintervalls fortgesetzt wird, wobei der angerufene Apparat (DTE) (7) ein Signal ausgibt, das den Anschlußstift zur Meldung der Terminalapparat-Betriebsbereitschaft (C 108/2, C 105) in den aktiven Zustand versetzt, sofern die Initialisierungsprozedur mit einem für die Fortsetzung der Verbindung günstigen Ergebnis abschließt;

e) zu Ende der Zeitgebunsintervalls (X) die Ausgabe des Zeitgabeschaltkreises (T) disaktiviert wird, sodaß daraufhin die Verbindung zwischen Netzstromversorgung (11) und angerufenem Terminalapparat (7) nur bestehen bleibt, wenn der angerufene Terminalapparat (7) den aktiven Zustand des Anschlußstiftes zur Meldung der Betriebsbereitschaft (C 108/2, C 105) aufrechterhält.

4. Verfahren wie unter Patentanspruch 1 oder 2 beschrieben, gekennzeichnet durch den Umstand, daß

a) das Rufsignal über eine Verbindung mit dem Signalerkennungs-Anschlußstift (C 109) des Schnittstellenapparats (5) auf der angerufenen Seite eine Zeitgebungsschaltung (T') für ein zuvor festlegbares Zeitintervall (X) aktiviert, das größer ist als das Zeitintervall ($t^1$, $t^2$, $t^3$), das zur Ausführung der Initialisierungsprozedur benötigt wird;

b) die besagte Zeitgebungsschaltung augenblicklich die Stromversorgung des angerufenen Terminalapparats (7) bewirkt und diese für die gesamte Dauer des Zeitintervalls (X) aufrechterhält;

c) die Initialisierungsprozedur beginnt und für die Dauer des für sie charakteristischen Zeitintervalls ($t^1$, $t^2$, $t^3$) fortgesetzt wird, wobei der angerufene Apparat (7) ein Signal ausgibt, das den Anschlußstift zur Meldung der Terminalapparat-Betriebsbereitschaft (C 105) in den aktiven Zustand versetzt, sofern die Initialisierungsprozedur mit einem für die Fortsetzung der Verbindung günstigen Ergebnis abschließt;

d) das Rufsignal über ein Verbindung mit dem Signalerkennungs-Anschlußstift (C 109) des Schnittstellenapparates (5) auf der angerufenen Seite auch an eine Stromversorgungs-Kontrollschaltung (Q') weitergeleitet wird, die für die Ausgabe eines Signals (i) zur Zeitgebungsschaltung (T') sorgt, welches im Falle ihres Vorhandenseins die Reaktivierung der Stromversorgung des angerufenen Terminalapparats (7) unterbindet;

e) die Stromversorgungs-Kontrollschaltung (Q') mit dem Anschlußstift zur Meldung der Terminalapparat-Betriebsbereitschaft (C 105) des angerufenen Terminalapparats (7) verbunden ist, sodaß bei Abschluß der Initialisierung mit positivem Ergebnis der Anschlußstift zur Meldung der Terminalapparat-Betriebsbereitschaft (C 105) in den Zustand ON versetzt wird und sie die Ausgabe eines Signals (c) bewirkt, das dafür sorgt, daß die Stromversorgung des angerufenen Terminalapparats (7) aufrechterhalten wird;

f) bei Anschluß des Zeitgebungsintervalls (X) die Zeitgebungsschaltung (T') das Signal deaktiviert, das zuvor die Aktivierung der Netzstromversorgung (11) zum angerufenen Terminalapparat (7) bewirkt hatte; die Stromversorgung bleibt nur bestehen, wenn der angerufene Terminalapparat (7) den aktiven Zustand des Anschlußstiftes zur Meldung der Terminalapparat-Betriebsbereitschaft (C 105) aufrechterhält;

g) der gleichzeitige Mangel des Stromspannung beim Signalerkennungs-Anschlußstift (C 109) und beim Anschlußstift zur Meldung der Terminalapparat-Betriebsbereitschaft (C 105) für eine bestimmte Zeitspanne (Y) den Ausfall der Stromversorgung des angerufenen Terminalapparats (7) bewirkt.

5. Vorrichtung zur ferngesteuerten Einschaltung von angerufenen Terminalapparaten (7) zur ortsfernen Datenübertragung und -verarbeitung über einen Komplex von mindestens einem anrufenden Terminalapparat DTE (1) und mindestens einem angerufenen Terminalapparat (7), die mit ihren jeweiligen Schnittstellenapparaten (3, 5) verbunden sind, welche mit einem Übertragungsträger (4, 4a) verbunden sind, wobei der besagte angerufene Terminalapparat (7) in der Lage ist, eine Eigeninitialisierungsprozedur auszuführen, gekennzeichnet durch den Umstand, daß

a) die besagte Einschalt-Vorrichtung zwischen dem Schnittstellenapparat (5) auf der angerufenen Seite und dem angerufenen Terminalapparat (7) angeordnet ist;

b) die besagte Einschalt-Vorrichtung eienen Apparat umfaßt, der für den anrufenden Apparat den Zustand der Betriebsbereitschaft des angerufenen Apparates simuliert, wobei besagter Apparat mindestens eine Zeitgebungsschaltung (T, T') besitzt, die ein zuvor festlegbares Zeitgebungsintervall (X) aufweist, das größer ist als Zeitintervall ($t^1$, $t^2$, $t^3$), das der angerufene Terminalapparat (7) zur Ausführung der Eigeninitialisierungsprozedur benötigt, wobei der Eingang der besagten Zeitgebungsschaltung (T, T') mit dem Anschlußstift zur Erkennung eines eintreffenden Signals (C 125, C 109) des Schnittstellenapparates (5) verbunden ist, wobei die Ausgabe der besagten Zeitgebungsschaltung die Stromversorgung des angerufenen Terminalapparats (7) über mindestens eine Stromtrennvorrichtung (K, W) regelt, sodaß der angerufene Apparat nur dann weiter mit Strom versorgt wird, wenn er seine Eigeninitialisierungsprozedur erfolgreich zu Ende geführt hat.

6. Vorrichtung wie unter Patentanspruch 5 beschrieben, gekennzeichnet durch den Umstand, daß die Stromtrennvorrichtung einen Fernschalter (W) umfaßt, der mit einem Relais (K) verbunden ist.

7. Vorrichtung wie unter Patentanspruch 5 oder 6 beschrieben, gekennzeichnet durch den Umstand, daß sie von einem geeigneten Transformator (TRAS) gespeist wird, der mit der externen Netzstromversorgung (11) verbunden ist.

8. Vorrichtung wie unter einem beliebigen der Patentansprüche 5 bis 7 beschrieben, gekennzeichnet durch den Umstand, daß auch eine Stromversorgungs-Kontrollschaltung (Q) vorgesehen ist, die derart gestaltet ist, daß sie bei vorhandenem Freigabesignal, das der Verbindung zum Anschlußstift zur Meldung "Schnittstellenapparat betriebsbereit" (C 107, C 106) entnommen wurde, eine Erregerspannung an die Stromtrennvorrichtung (K W) ausgibt.

9. Vorrictung wie unter einem beliebigen der Patentansprüche 5 bis 7 beschrieben, gekennzeichnet durch den Umstand, daß auch eine Stromversorgungs-Kontrollschaltung (Q') vorgesehen ist, die mit dem Signalerkennungs-Anschlußstift (C 109) und mit dem Anschlußstift zur Meldung der Terminalapparat-Betriebsbereitschaft (C 105) verbunden ist, wobei diese Schaltung derart gestaltet ist, daß

—sie beim Eintreffen des Signals ON Signalerkennungs-Anschlußstift (C 109) eine Zeitgebungsschaltung (T') aktiviert, die aktiviert bleibt bis zum Eintreten des Reset-Zustands und die der Zeitgebungsschaltung (T') untersagt, die Stromtrennvorrichtung (K, W) während der Aktivierungsphase zu schließen;

—sie beim Eintreffen des Signals ON beim Anschlußstift zur Meldung der Terminalapparat-Betriebsbereitschaft (C 105) die Stromtrennvorrichtung (K, W) solange geschlossenen hält, bis der Reset-Zustand eintritt;

—sie bei Erkennung des gleichzeitigen Mangels der Signale beim Anschlußstift zur Meldung der Terminalapparat-Betriebsbereitschaft (C 105) und beim Signalerkennungs-Anschlußstift (C 109) nach Verstreichen eines Zeitintervalls (Y) die Zeitgebungsschaltung (T') disaktiviert und so den Ausfall der Stromversorgung des angerufenen Terminalapparats bewirkt.

## Revendications

1. Procédé pour l'allumage télécommandé d'appareils terminaux pour la transmission et l'elaboration des données à distance (tele-processing), selon lequel au moins un appareil terminal appelant DTE (1) grâce à au moins un appareil d'interface DCE (3) envoie un signal d'appel sur au moins un organe de transmission relié à un appareil d'interface (5) relié à son tour à au moins un appareil terminal appelé DTE (7), ce dernier capable d'éffectuer une procédure d'initialisation chaque fois qu'il se trouve relié à l'alimentation,

caractérisé par le fait que l'on prévoie qu'à l'arrivée d'un signal d'appel à un appareil terminal éteint (7) non garni, un dispositif (10, 10') s'occupe

I) de donner le courant à l'appareil terminal (7) appelé qui procède à sa proper initialisation;

II) en même temps de simuler pour l'appareil appelant (1), pendant un intervalle de temps (X) supérieur au temps nécessaire pour l'initialisation de l'appareil terminal appelé (7), la condition de "prêt" de l'appareil terminal appelé, déterminant sur l'appelant une phase d'attente qui maintienne en fonction l'appel durant toute la période de temps (X); un fois l'intervalle de temps terminé (X) la phase d'attente est interrompue et l'alimentation du courant à l'appareil terminal appelé (7) persiste seulement si celui-ci a terminé positivement sa propre initialisation.

2. Procédé selon la revendication 1, caractérisé par le fait que le début de la transmission des données significatives se produit seulement lorsque l'appareil terminal appelé (7) a confirmé per software le résultat positif de sa propre phase d'initialisation.

3. Procédé selon la revendication 1 ou 2, caractérisé par le fait que

a) le signal appelant par l'intermédiaire l'une liaison avec le pin révèlateur de signal (C 125, C 109) de l'appareil d'interface (5) côté appelé, active un circuit de temporisation (T) pour une période de temps prédéterminable (X) supérieure à celle nécessaire pour effectuer la procédure s'initialisation;

b) le circuit de temporisation en question envoie immédiatement à l'appareil d'interface (5) côté appelé un signal qui place en condition active le pin de signalisation appareil terminal prêt (C 108/2, C 105) et maintien cette condition pendant toute la période de temps (X);

c) le pin prêt à l'envoi (C 107, C 106) de l'appareil d'interface (5) côté appelé est placé sur ON déterminant l'alimentation de l'appareil terminale appelé (7);

d) la procédure d'initialisation se met en marche et se poursuit pendant l'intervalle de temps qui lui est propre, s'il se termine favorablement à la suite de la liaison, l'appareil (DTE) appelé (7) envoie un signal qui place en condition active le pin de l'appareil terminal prêt (C 108/2, C 105);

e) au terme de l'intervalle de temporisation (X), la sortie du circuit de temporisation (T) est désactivée de telle façon que, successivement, la liaison entre alimentation de courant (11) et appareil terminal appelé (7) reste un fonction seulement si l'appareil terminal appelé (7) maintien en condition active le pin de l'appareil terminal prêt (C 108/2, C 105).

4. Procédé selon la revendication 1 ou 2, caractérisé par le fait que

a) le signal appelant, grâce à une liaison avec le pin révèlateur de signal (C 109) de l'appareil d'interface (5) côté appelé, active un circuit de temporisation (T') pour un intervalle de temps prédéterminable (X) supérieur à celui $(t_1, t_2, t_3)$ nécessaire pour effectuer la procédure d'initialisation;

b) ce circuit de temporisation détermine immédiatement l'alimentation de l'appareil terminal appelé (7) en la maintenant en fonction durant toute la durée de l'intervalle de temps (X);

c) la procédure d'initialisation se met en marche et se poursuit pendant l'intervalle de temps qui lui est caractéristique $(t_1, t_2, t_3)$, s'il se termine favorablement à la suite de la liaison, l'appareil applé (7) envoie un signal qui place en condition active le pin de l'appareil terminal prêt (C 105);

d) le signal appelant, grâce à la liaison avec le pin révèlateur de signal (C 109) de l'appareil d'interface (5) côté appelé, est également envoyé à un circuit de contrôle alimentation (Q') qui procède à l'envoi d'un signal (i) au circuit de temporisation (T'), le signal en question empêche en sa présence la remise en route de l'alimentation de l'appareil terminal appelé (7);

e) le circuit de contrôle d'alimentation (Q') est connexe avec le pin de l'appareil terminal prêt (C 105) de l'appareil terminal appelé (7), de façon que lorsque, une fois terminée de manière positive l'initialisation, le pin de l'appareil terminal prêt (C 105) est mis en ON il provoque l'émission d'un signal (c) qui s'occupe de maintenir en fonction l'alimentation de courant de l'appareil terminal appelé (7);

f) au terme de l'intervalle de temporisation (X), le circuit de temporisation (T') ôte le signal qui avait activé l'alimentation de courant (11) à l'appareil terminal appelé (7); l'alimentation reste en fonction seulement si l'appareil terminal appelé (7) maintien en condition active le pin d'appareil terminal prêt (C 105);

g) le manque temporaire de tension au pin révèlateur de signal (C 109) et en même temps au pin d'appareil terminal prêt (C 105) pendant une période de temps fixée d'avance (Y) provoque la chute d'alimentation de l'appareil terminal appelé (7).

5. Dispositif pour l'allumage télécommandé d'appareils terminaux appelés (7) pour la transmission et l'élaboration des données à distance sur un ensemble comprenant au moins un appareil terminal appelant (1) et au moins un appareil terminal appelè (7) reliés aux appareils relatifs d'interface (3, 5) connexes à un organe de transmission (4, 4a), étant dit appareil terminal appelé (7) capable d'effectuer une propre procédure d'initialisation, caractérisé par le fait que

a) ledit dispositif pour l'allumage est placé entre l'appareil d'interface (5) côté appelé et l'appareil terminal appelé (7); et

b) il comprend un appareil qui simule, à l'appareil appellant, la condition de prêt de l'appareil appelé, cet appareil comprenant au moins un circuit de temporisation (T, T') ayant un intervalle de temporisation prédéterminable (X) supérieur à l'interval de temps $(t_1, t_2, t_3)$ nécessaire à l'appareil terminal appelé (7) pour effectuer sa propre procédure d'initialisation, l'entrée de ce circuit de temporisation (T, T') étant connexe au pin révèlateur de signal en arrivée (C 125, C 109) de l'appareil d'interface (5), commandant la sortie du circuit de temporisation en question l'alimentation de l'appareil terminal appelé (7) grâce à au moins un dispositif interrupteur (K, W) de façon que l'appareil appelé continue à être alimenté seulement s'il a porté à terme et avec succès sa propre procédure d'initialisation.

6. Dispositif selon la revendication 5, caractérisé par le fait que le dispositif interrupteur comprend un télérupteur (W) relié à un relais (K).

7. Dispositif selon la revendication 5 ou 6, caractérisé par le fait que celui-ci est alimenté par un transformateur (TRAS) connexe à l'alimentation du courant externe (11).

8. Dispositif selon une quelconque des revendications de 5 à 7, caractérisé par le fait qu'il est prévu aussi un circuit du contrôle alimentation (Q) qui, en présence d'un signal d'approbation prélevé par la liaison au pin de signalisation "appareil d'interface prêt" (C 107, C 106) celui-ci envoie une tension d'excitation au dispositif interrupteur (K, W).

9. Dispositif selon une quelconque des revendications de 5 à 7, caractérisé par le fait qu'il est prévu un circuit de contrôle alimentation (Q') relié au pin révèlateur de signal (C 109) et au pin de signalisation appareil terminal prêt (C 105), ce circuit étant tel que:

—à l'arrivée du signal ON au pin révèlateur de signal (C 109) il active un circuit de temporistion (T') qui reste activé jusqu'à ce que se vérifie la condition de reset et empêche au circuit de temporisation (T') de fermer de dispositif interrupteur (K, W) tant qu'il reste active;

—à l'arrivée du signal ON au pin de l'appareil terminal prêt (C 105) celui-ci tient fermé le dispositif interrupteur (K, W) jusqu'à ce que se vérifie la condition de reset;

—au relévé du manque temporaire de signals soit au pin d'appareil terminal prêt (C 105) qu'au pin révèlateur de signal (C 109), passé une periode de temps (Y), il désactive le circuit de temporisation (T') en faisant de ce fait tomber l'alimentation de l'appareil terminal appelé.

FIG. 1

FIG. 1a

FIG. 2

FIG. 3

FIG. 3a

FIG. 4a

FIG. 4